(19) Europäisches Patentamt
European Patent Office
Office européen des brevets

(11) **EP 2 439 754 A1**

(12) **EUROPEAN PATENT APPLICATION**
published in accordance with Art. 153(4) EPC

(43) Date of publication:
**11.04.2012 Bulletin 2012/15**

(51) Int Cl.:
**H01F 6/04** (2006.01)  **H01F 6/00** (2006.01)
**H01L 39/04** (2006.01)

(21) Application number: **10783185.1**

(22) Date of filing: **26.02.2010**

(86) International application number:
**PCT/JP2010/053047**

(87) International publication number:
**WO 2010/140398 (09.12.2010 Gazette 2010/49)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **05.06.2009 JP 2009135814**

(71) Applicant: **Hitachi, Ltd.**
**Chiyoda-ku**
**Tokyo 100-8280 (JP)**

(72) Inventors:
• **TANAKA, Hiroyuki**
**Chiyoda-ku, Tokyo 100-8220 Tokyo (JP)**

• **OKADA, Michiya**
**Hitachi-shi**
**Ibaraki 319-1292 (JP)**
• **TAKAHASHI, Masaya**
**Hitachi-shi**
**Ibaraki 319-1292 (JP)**
• **ICHIKI, Yota**
**Hitachi-shi**
**Ibaraki 319-1292 (JP)**

(74) Representative: **Beetz & Partner**
**Patentanwälte**
**Steinsdorfstrasse 10**
**80538 München (DE)**

(54) **REFRIGERATOR COOLING-TYPE SUPERCONDUCTING MAGNET**

(57)      Magnetic field attenuation in a persistent current mode operation is prevented, heat generation at a connecting part between the persistent current switch and the superconducting coil, and increase in a cooling temperature of the superconducting coil in a current supplying mode is suppressed to a minimum.

The refrigerator cooling-type superconducting magnet J according to the present invention including a superconducting coil (2), a persistent current switch (1) for switch between a persistent current mode and a current supplying mode; a superconducting coil (2), first and second cryogenic refrigerators (3, 4) for respectively cooing the superconducting coil (2) and the persistent current switch (1); a vacuum vessel (10) for housing the super conducting coil (2), the persistent current switch (1), and cooling stages (31, 32, 41, 42) of the first and second cryogenic refrigerators (3, 4), the magnet includes a superconducting wire (5) for connecting the superconducting coil (2) to the persistent current switch (1) and a superconducting bypass line (6) electrically connected in parallel to the superconducting wire along a longitudinal direction, wherein a superconducting critical temperature of the superconducting bypass line (6) is higher than a superconducting critical temperature of the persistent current switch (5).

FIG.1

EP 2 439 754 A1

**Description**

TECHNICAL FIELD

The present invention relates to a refrigerator cooling-type superconducting magnet used in a status in which the magnet is cooled to a temperature equal to or lower than a superconducting critical temperature by a refrigerator.

BACKGROUND ART

Recently application of an analyzing apparatus using a high intensity magnetic field environment has become popular. For example, in a medical field, there is magnetic resonance imaging (Magnetic Resonance Imaging: MRI) for imaging a status in a body with an electromagnetic wave generated while magnetic resonance is caused in atomic nuclei of hydrogen atoms. Products having magnetic field intensities of more than 3 teslas have been commercially available to provide a high resonance and a high speed examination. In a biotechnology field, a high intensity magnetic field NMR (Nuclear Magnetic Resonance: NMR) system having a resonance frequency of hydrogen atoms of more than 1GHz is expected to be developed.

As long as superconducting is applied, an environment below a superconducting critical temperature providing an electric resistance of zero should be realized. Generally, to realize an environment below the superconducting critical temperature, liquid helium is used. However, a future possibility of exhaustion of helium is pointed out because helium is a limited natural resource. Currently, superconducting magnets using a coil using a superconducting material cooled by liquid helium are essential in medical and analyzing fields. When use of the liquid helium becomes difficult, various problems will occur.

Then, a cooling system using a cryogenic refrigerator has been developed to realize an evironment below the superconducting critical temperature without using the liquid helium. Though helium gas is used in the cryogenic refrigerator with compression, a quantity is low and used in a closed status and thus the quantity does not decrease as long as the helium is not released to ambient.

Alternatively, both the cryogenic refrigerator and liquid helium may be used. This is provided by a configuration capable of zero emission of liquid helium by re-condensing the evaporated helium gas by the cryogenic refrigerator. However, because when quench occurs during excitation, a large quantity of stored liquid helium vaporizes and supply of the liquid helium is restricted, it becomes difficult to provide the environment below the superconducting critical temperature.

A current value (critical current value) allowed to flow through the superconducting coil depends on a cooling temperature, and the higher the cooling temperature becomes, the smaller the critical current value becomes. Because a high intensity of current should be supplied to generate a high electromagnetic field, a temperature of the superconducting coil should be kept as low as possible.

When the liquid helium is used, the superconducting coil is kept at a liquid helium temperature (absolute temperature of 4.2 K). However, when the cryogenic reregister is used as a cooling source, a cooling temperature depends on a performance of the cryogenic refrigerator. For example, when a heat load on the cryogenic refrigerator becomes large, a reachable cooling temperature of the cryogenic refrigerator increases. Therefore, to decrease the temperature of the superconducting coil, the heat load on the superconducting coil and the cryogenic reregister should be reduced.

In the MRI and the NMR, an extremely high stability of electromagnetic field is required. When a current is supplied from the outside (current supplying mode), the current supplying mode is not applicable to the MRI and the NMR because the supplied current itself has an instability to some extent.

Accordingly, the superconducting magnets for the MRI and the NMR are generally operated in a persistent current mode. The persistent current mode is a status in which the current applied from the outside keeps circulating in the closed loop made of superconducting material and thus it is unnecessary to supply the current from an outside.

The closed loop made of the superconducting material has an extremely low electric resistance with an extremely low energy loss, and thus attenuation of current flowing in the closed loop is extremely low. Accordingly, in a system required to have a high electromagnetic field stability in an examination space such as the MRI and the NMR, it is necessary to suppress the electric resistance of the closed loop made of the superconducting material below unacceptable value.

More specifically, decrease in the electromagnetic field should be less than 1 % for a hundred years. Thus, not only no electric resistance of superconducting wires but also an electric resistance at a superconducting connection part should be suppressed below 1 nano-ohm. In superconductive metals such as NbTi (niobium - titanium alloy) and $Nb_3Sn$ (niobium selenide), because a connecting method for a connection part where superconducting wires are connected has been established, the electric resistance of the closed loop including the connection part can be suppressed within the acceptable range.

On the other hand, in the high temperature superconducting material, because the connecting method for the connection part has not been established, it is difficult to suppress the electric resistance of the closed loop including the high temperature superconductor to such an electric resistance usable in the MRI and the NMR (see non-patent document 1).

In the superconducting magnet capable of operating in the persistent current mode, a persistent current switch should be switched between the persistent current mode and the current supplying mode to supply the current from an external DC power supply to the superconducting coil.

The persistent current switch is an element made of a superconducting material. In the current supplying mode, the persistent current switch is heated above the superconducting critical temperature, and thus in a normal conducting status. Because an electric resistance of the persistent current switch is greater than an electric resistance of the superconducting coil, the current supplied from an external DC power supply flows into the superconducting coil having a small electric resistance. Therefore, a quantity of the current flowing into the superconducting coil can be determined by operating a current value of the external DC power supply. After a given quantity of current is supplied, when the persistent current switch is cooled below the superconducting critical temperature to provide super conducting, the closed loop of superconducting is completed, so that the current keeps flowing therethrough without attenuation because there is no electric resistance.

However, in the current supplying mode, the persistent current switch is kept above the superconducting critical temperature, which can be a heat source for the superconducting coil cooled below the superconducting critical temperature. More specifically, in the current supplying mode, because the persistent current switch serves as a heat source, heat in the persistent current switch propagates to the superconducting coil, so that the heat load to the superconducting coil becomes large to increase a reachable temperature of the cryogenic refrigerator, which is a cooling source for the superconducting coil. Accordingly, the critical current value decreases, so that only low magnetic field can be generated.

When the superconducting wire connecting the superconducting coil and the persistent current switch shifts to the normal conduction status even partially, a specific electric resistance occurs, so that the current flowing through this part generates heat. Because the quantity of the current supplied to generate a strong electromagnetic field is large, a heat quantity at the part, which is transient to the normal conduction, becomes large. This requires a cooling body for cooling the part.

When the superconducting magnet is cooled with the liquid helium, heat is released by evaporation of the liquid helium around the superconducting wire, wherein the liquid helium around the superconducting wire serves as a coolant. However, in a superconducting magnet having a cooling configuration using a cryogenic refrigerator without liquid helium, the superconducting wire cannot be cooled through a coolant, which thermally contacts a cooling source, is not installed because a circumference around the superconducting wire is in a vacuum status.

The superconducting coil or the persistent current switch, or both the superconducting coil and the persistent current switch are thermally coupled to the coolant to be cooled. When a part contacting none of the superconducting coil and the persistent current switch is developed, a large quantity of heat is generated at the part. Accordingly, the coolant is generally installed so as to stride both the superconducting coil and the persistent current switch.

In the current supplying mode, because the coolant is directly connected from the persistent current switch heated above the superconducting critical temperature to the superconducting coil cooled below the superconducting critical temperature, thermal conduction from the persistent current switch via the coolant to the persistent current switch to the superconducting coil will become a problem in keeping the superconducting status of the superconducting coil.

When a quantity of heat generation in the superconducting wire can be reduced because the cooling capacity necessary for the coolant for cooling the superconducting wire connecting the superconducting coil and the persistent current switch is largely occupied by a power for cooling heat generated in the superconducting wire, so that a thermal transmission area of the coolant can be made small because a quantity of heat transmitted to the cooling source via the coolant is small. This reduces the thermal conductivity from the persistent current switch to the superconducting coil in the current supplying mode.

Then, a method of installing a superconductor made of a material having a higher superconducting critical temperature than the persistent current switch between the persistent current switch and the superconducting coil has been proposed.

According to this configuration, heat is not generated even in a status where the persistent current switch is heated above the superconducting critical temperature because the high temperature superconductor connecting the persistent current switch and the superconducting coil can be kept in the superconducting status.

In addition, use of an yttrium-system of superconductors having a thermal conductivity smaller than copper by about two digits increases a thermal resistance between the superconducting coil and the persistent current switch.

Also use of the high temperature superconductor provides a stable operation irrespective of operation of the persistent current switch (see Patent Document 1).

[Prior Art]

[Patent Document]

[Patent Document 1] JP 2003-151821 A.

[Non-Patent Document]

[Non-Patent Document 1]

International Superconductivity Technology Center, "Superconductivity Web21", 2009, January, published by Superconductivity Web21 Editing Division of International Superconductivity Technology Center.

DISCLOSURE OF THE INVENTION

[Summary of Invention]

[Problems to be solved by Invention]

To prevent the superconducting wire connecting the persistent current switch and the superconducting coil from generating heat, a coolant is necessary for transmitting the heat in the superconducting wire to a cooling source. However, heat transmission from the persistent current switch heated above the superconducting critical temperature to the superconducting coil through the coolant will be caused, which increase a heat load on the superconducting coil, so that a cooling temperature of the cryogenic refrigerator may increase and the temperature of the superconducting coil may increase. This reduces the critical current value of the superconducting coil, so that there is a problem in supplying a current necessary for generating a high electromagnetic field.

As described in the Patent Document 1, use of a high temperature superconducting material as a material of the superconducting wire connecting the persistent current switch to the superconducting coil, is efficient for suppressing heat.

However, to install the high temperature superconductor between the superconducting coil and the persistent current switch, superconducting connection parts are necessary at least two locations.

As described above, the electric resistance at the superconducting connection parts in the high temperature superconductor is larger than the electric resistance of the superconducting connection in the metallic superconducting material. Accordingly, a specific magnetic field attenuation in the persistent current mode is caused in the supercomputing magnet in which a high temperature superconductor is connected at an intermediate location in a closed loop made of the superconducting material. Thus there is a problem in that this configuration cannot be used in a device requiring a high magnetic field stability such as the NMR and the MRI.

In consideration of such a circumstance, the present invention provides a refrigerator cooling-type superconducting magnet to prevent the magnetic field from attenuating on a persistent current mode operation as well as to suppress heat generation at connection parts between the persistent current switch and the superconducting coil to suppress increase in a cooling temperature for the superconducting coil in the current supplying mode to a minimum value.

[Means for Solving Problems]

To achieve the aim, a refrigerator cooling-type superconducting magnet of claim 1 of the invention, including: a superconducting coil configured to generate a magnetic field; a persistent current switch configured for switching between a persistent current mode in which a current is not supplied from an external power supply to the superconducting coil and a current supplying mode in which the current is supplied from the external power supply to the superconducting coil; a first cryogenic refrigerator configured to cool the superconducting coil; a second cryogenic refrigerator configured to cool the persistence current switch; a vacuum vessel configured to house the superconducting coil, and cooling stages of the first and second cryogenic temperature refrigerators therein in a vacuum status, the refrigerator cooling-type superconducting magnet comprising:

a superconducting wire for connecting the superconducting coil to the persistent current switch; and

at least one superconducting bypass line disposed in parallel to the superconducting wire, electrically coupled to the superconducting wire along a longitudinal direction, **characterized in that** a superconducting critical temperature of the superconducting bypass line is higher than a superconducting critical temperature of the persistent current switch.

[Advantageous Effect of Invention]

According to the refrigerator cooling-type superconducting magnet as claimed in claim 1, the refrigerator cooling-type superconducting magnet can be provided which prevents magnetic attenuation in the persistent current mode operation as well as suppresses heat generation at the connection parts between the persistent current switch and the superconducting coil to suppress increase in the superconducting coil cooling temperature in the current supplying mode within a minimum value.

BRIEF DESCRIPTION OF DRAWINGS

Fig. 1 is a cross section view illustrating configuration of the refrigerator cooling-type superconducting magnet of the embodiment of the present invention;
Fig. 2 is a simplified conception drawing illustrating a current circuit and a cooling configuration in the current supplying mode of the refrigerator cooling-type superconducting magnet according to the embodiment;
Fig. 3 is a simplified conception drawing illustrating a current circuit and a cooling configuration in the current supplying mode of the refrigerator cooling-type superconducting magnet according to the embodiment;
Fig. 4 is a cross section view, taken along line A-A in Fig. 3, illustrating a connection part between a superconducting wire and a superconducting bypass line;
Fig. 5 is a cross section view, taken line A-A in Fig. 3, illustrating the connection part between the superconducting wire and the superconducting bypass line according to a first modification of the present invention;
Fig. 6 is a cross section view, taken line A-A in Fig. 3, illustrating the connection part between the superconducting wire and the superconducting bypass line according to a second modification of the present invention; and
Fig. 7 is a cross section view, taken line A-A in Fig. 3, illustrating the connection part between the superconducting wire and the superconducting bypass line according to a third modification of the present invention.

MODE FOR CARRYING OUT INVENTION

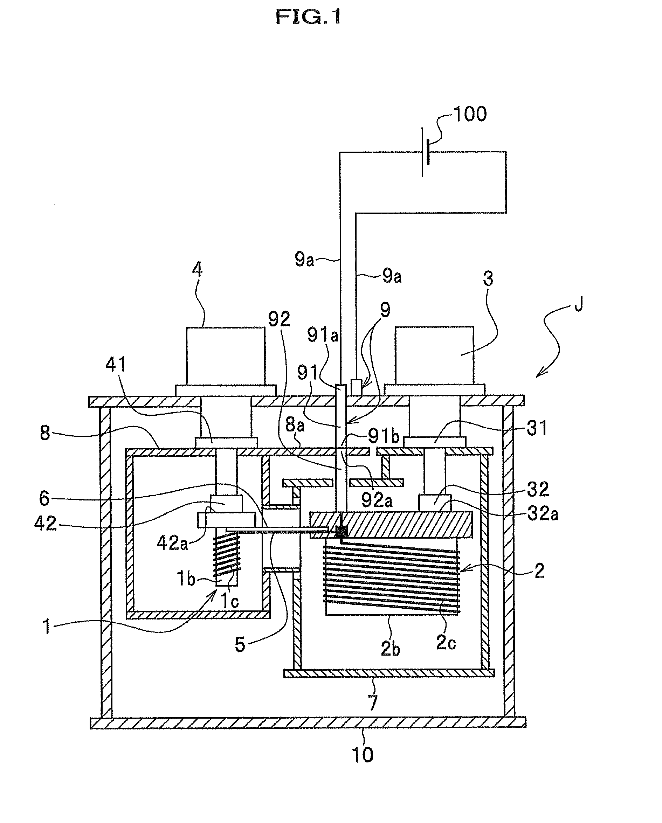

Hereinbelow with reference to attached drawings will be described an embodiment of the present invention. Fig. 1 is a cross section view illustrating a configuration of a refrigerator cooling-type superconducting magnet J which is a typical embodiment of the present invention.

<Whole Structure of Refrigerator Cooling-Type Superconducting Magnet J>

The refrigerator cooling-type superconducting magnet J according to the embodiment includes a superconducting coil 2 for generating a magnetic force when a current flows, an external DC power supply 100 configured to supply a current to the superconducting coil 2, a current lead 9 for connecting the external DC power supply 100 to the superconducting coil 2, a persistent current switch 1 configured for switching between a current supplying mode in which the current is supplied from the external DC power supply 100 to the superconducting coil 2 and a persistent current mode in which the current is not supplied from the external DC power supply 100 to the superconducting coil 2 and; a cryogenic refrigerator 3 configured to cool the cryogenic refrigerator 3 configured to cool the superconducting coil 2 to a temperature equal to or lower than the superconducting critical temperature, a cryogenic refrigerator 4 configured to cool the persistent current switch 1 to a temperature equal to or lower than the superconducting critical temperature, a radiation shield 7 installed around the superconducting coil 2 cooled to the temperature equal to or lower than the superconducting critical temperature, the radiation shield 8 installed around the persistent current switch 1 cooled to the temperature equal to or lower than the superconducting critical temperature, and a vacuum vessel 10 configured to contain the superconducting coil 2, the persistent current switch 1, and the radiation shields 7, 8 in a vacuum status.
Hereinbelow will be described each configuration of the refrigerator cooling-type superconducting magnet J in detailed.

<Superconducting Coil 2>

A superconducting coil 2 shown in Fig. 1 is provided by that a superconducting wire 2c, which becomes in a superconducting status at a temperature equal to or lower than a predetermined superconducting critical temperature, is wound on a coil bobbin 2b.
Provided between the coil bobbin 2b and the superconducting wire 2c is an insulation layer (not shown) for electrical insulation. Also provided between the superconducting wire 2c is an insulation layer (not shown) for electrically insulation.
The number of turns of the superconducting wire 2c on the coil bobbin 2b is determined such that when a predetermined current flows in the superconducting wire 2c of the superconducting coil 2, a magnetic field having a predetermined intensity is generated from the superconducting wire 2c.
The coil bobbin 2b is manufactured by producing a plurality of superconducting coils separately and connecting each pair of the superconducting coils with connecting bodies (not shown).
The superconducting coil 2 includes a shield coil (not shown) for shielding a magnetic field externally leaked.

<Persistent Current Switch 1>

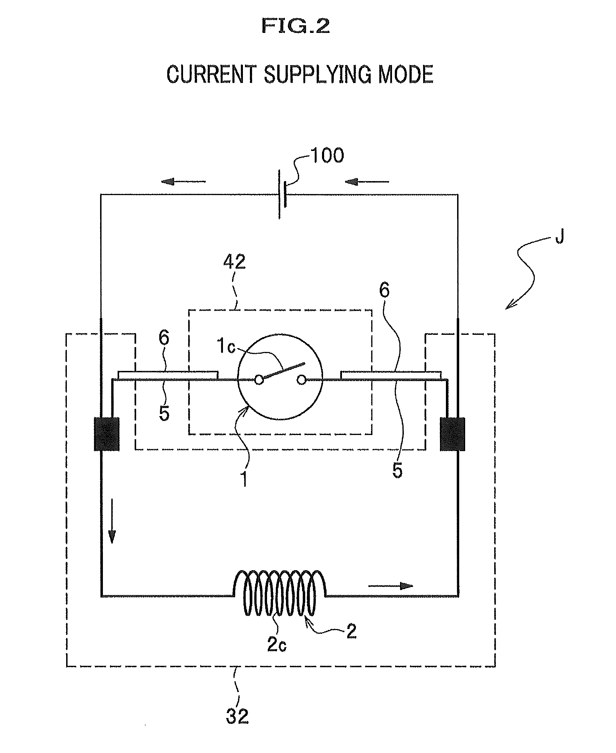

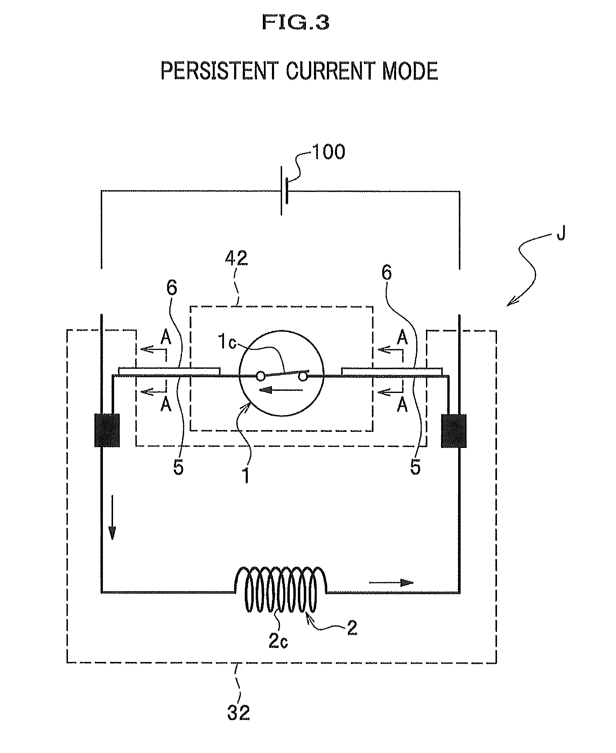

A persistent current switch 1 shown in Fig. 1 is a switch for switching between the persistent current mode for supplying a current to the superconducting coil 2 from an external DC power supply 100 (see Fig. 3) and the current supplying mode (see Fig. 2)
More specifically, the persistent current switch 1 is a switch for turning on and off using difference between an extremely low electric resistance at a temperature equal to or lower than the superconducting critical temperature of a superconducting wire 1c and a specific electric resistance at a temperature equal to or higher than the superconducting critical temperature of the superconducting wire 1c.
The persistent current switch 1 includes a bobbin 1b and the superconducting wire 1c wound on the bobbin 1b. In the persistent current switch 1, two superconducting wires 1c provided by folding the superconducting wire 1c at a center thereof are wound on the bobbin 1b in the same direction from the folding part. This is referred to as non-inductive winding which provides such an effect that magnetic fields generated by the superconducting wire 1c are cancelled out each other because currents in two superconducting wires 1c flow in opposite directions.
Because it is necessary that the superconducting wires 1c of the persistent current switch 1 are in an insulation status, an insulator is disposed between the superconducting wires 1c. A gap between the bobbin 1b and the superconducting wire 1c is also kept in an insulation status.
The superconducting wire 1c of the persistent current switch 1 is cooled to a temperature equal to lower than the superconducting critical temperature by a cryogenic refrigerator 4. Inside the bobbin 1b of the persistent current switch 1, a heater is housed (not shown) which generates heat to make the superconducting wire 1c in a normal conduction status to make to an electric resistance large to turn OFF the switch. On the other hand, stopping heat generation by the heater causes the superconducting wire 1c to be in a superconducting status to make the electric resistance zero to turn ON the switch.

<Cryogenic Refrigerator 3, Cryogenic Refrigerator 4>

The superconducting coil 2 shown in Fig. 1 is cooled down to a temperature equal to or lower than the superconducting critical temperature by the cryogenic refrigerator 3.
As described above, the persistent current switch 1 is cooled to a temperature equal to or lower than the superconducting critical temperature by the cryogenic refrigerator 4.
The cryogenic refrigerator 3 and the cryogenic refrigerator 4 comprise, for example, a Gifford-McMahon type refrigerator (staring refrigerator) or a pulse tube refrigerator and as a gas sealed inside the refrigerator, helium is used. When a heat load on the cryogenic refrigerator 3 and the cryogenic refrigerator 4 is large, a GM/JT refrigerator can be used.
The cryogenic refrigerator 3 and the cryogenic refrigerator 4 are disposed with such a distance from the superconducting coil 2 that the magnetic field generated by the superconducting coil 2 does not affect operations of the cryogenic refrigerator 3 or the cryogenic refrigerator 4. Alternatively, there may be a case where the cryogenic refrigerator 3 and the cryogenic refrigerator 4 are disposed with such a distance from the superconducting coil 2 that operation of the cryogenic refrigerator 3 or the cryogenic refrigerator 4 does not disturb a main magnetic field generated by the superconducting coil 2.
In a case where cooling is performed to a liquefied temperature of helium by the cryogenic refrigerator 3 and the cryogenic refrigerator 4, it is desirable to use two-step stage type of cryogenic refrigerators each having two step stages for the cryogenic refrigerator 3 and the cryogenic refrigerator 4.
A first stage 31 of the cryogenic refrigerator 3 and a first stage 41 of the cryogenic refrigerator 4 have the lowest reachable temperature is equal to higher than 20 K.

The first stage 31 of the cryogenic refrigerator 3 is used as a cooling source for a radiation shield 7 installed around the superconducting coil 2, and the first stage 41 of the cryogenic refrigerator 4 is used as a cooling source for a radiation shield 8 installed around the persistent current switch 1.

A second stage 32 of the cryogenic refrigerator 3 and a second stage 42 of the cryogenic refrigerator 4 are respectively capable of cooling to temperatures equal to or lower than the liquefied temperature of liquid helium (4. 2 K) in accordance with kinds of the cryogenic refrigerators.

The superconducting coil 2 shown in Fig. 1 is cooled by the second stage 32 of the cryogenic refrigerator 3. At a contact part 32a between the second stage 32 of the cryogenic refrigerator 3 and the superconducting coil 2, Indium (not shown) is installed to decrease a contact heat resistance under a cryogenic temperature environment. Indium makes a thermal conduction good by decreasing the heat resistance by increasing a contact area because Indium has an effect to bury gaps in the contact part 32a because Indium has a high thermal conductivity in a cryogenic temperature range and has an effect to burry gaps in the contact part 32a because Indium is a soft metal.

The persistent current switch 1 is cooled by the second stage 42 of the cryogenic refrigerator 4. At a contact part 42a between the second stage 42 of the cryogenic refrigerator 4 and the persistent current switch 1, Indium (not shown) is installed to increase the contact area to decrease the heat resistance of the contact part 42a under the cryogenic temperature environment.

<Radiation Shield 7 and Radiation Shield 8>

The radiation shield 7 shielding the superconducting coil 2 is installed around the superconducting coil 2 to cover the superconducting coil 2 to prevent that the superconducting coil 2 cooled to a temperature equal to or lower than the superconducting critical temperature of the superconducting wire 2c from being directly subjected to a radiation heat quantity from the vacuum vessel 10 which is at a room temperature.

Similarly, the radiation shield 8 shielding the persistent current switch 1 is installed around the persistent current switch 1 to cover the persistent current switch 1 to prevent the persistent current switch 1 from being directly subjected to radiation heat quantity from the vacuum vessel 10 which is at a room temperature.

Formed on the radiation shield 8 is a lead heat transferring part 8a for absorbing heat to prevent heat in a current lead 9 penetrating the lead heat transferring part 8a from being transferred to the superconducting coil 2.

When the radiation shields 7 and 8 cooled to an absolute temperature of about 50 K are installed around the superconducting coil 2 and the persistent current switch 1, there are the radiation shield 7 and the radiation shield 8 at 50 K on a periphery of the superconducting coil 2 and the persistent current switch 1 cooled to a temperature equal to or lower than the superconducting temperature. This results in that the superconducting coil 2 and the persistent current switch 1 are subjected to a heat radiation quantity from the radiation shields 7 and 8 at 50 K.

The heat radiation quantity is proportional to a fourth power of the absolute temperature.

Accordingly, the heat radiation quantity to the superconducting coil 2 and the persistent current switch 1 is proportional to the forth power of 50 by, for example, the radiation shield 7 and the radiation shield 8 installed around the superconducting coil 2 and the persistent current switch 1. This can decrease the heat radiation quantity to a value equal to or lower than one thousandth of the heat radiation quantity proportional to a fourth power of 300 which is derived from a room temperature of 300 K when the radiation shield 7 and the radiation shield 8 are not installed.

On the other hand, the radiation shield 7 and the radiation shield 8 are installed in a vacuum vessel and receive heat radiation from a vacuum vessel 10 having a room temperature.

To reduce the heat radiation from the vacuum vessel 10 received by the radiation shield 7 and the radiation shield 8, a laminated heat insulation material (not shown) is installed in a vacuum layer between the vacuum vessel 10 and the radiation shield 7 and between the vacuum vessel 10 and the radiation shield 8. The laminated heat insulation material is provided by alternately laying a reflection member of a plastic film on which gold or aluminum is deposited, on a heat insulation spacer which is for preventing reflection films from contacting each other. As the heat insulation spacer, for example, a net, unwoven fabric, etc., are used.

<Current Lead 9>

The current flowing through the superconducting coil 2, shown in Fig. 1 is supplied from an external DC power supply 100 installed outside.

The current leads 9, 9 are connected to room temperature parts 9a, 9a to be connected to the external DC power supply 100 and to one end and the other end of the superconducting wire 2c of the superconducting coil 2 cooled to the temperature equal to or lower than the superconducting critical temperature. Fig. 1 only shows a status in which the current lead 9 is connected to one end of the superconducting coil 2. Because the part where the current lead 9 is connected to the other end of the superconducting coil 2 is located at an invisible location, the part is not shown in Fig 1.

When a current is supplied from the external DC power supply 100 to the superconducting coil 2 through the current lead 9, the current lead 9 generates heat by an electric resistance.

The current lead is generally manufactured with phosphorous-deoxidized copper having a low electric resistance. However, the phosphorous-deoxidized copper, having a high thermal conductivity, serves as a large heat invading path to the superconducting coil 2 in the radiation shield 7 by thermal conduction. Particularly, increase in thermal conduction to the superconducting coil 2 in the radiation shield 7 becomes a large problem to decrease the temperature of the superconducting coil 2 to the superconducting status.

Then, in the refrigerator cooling-type superconducting magnet J, to decrease the thermal conduction from the current lead 9, a lead high temperature part 91 between the room temperature end part 91a and a lead heat conducting part 8a is formed with the phosphorous-deoxidized copper, and a lead low temperature part 92 is formed with a material which becomes in a superconducting status at a cooling temperature of the radiation shield 8, such as an yttrium system superconductor.

Because the yttrium system superconductor has a lower thermal conductivity than copper by about double digits, the thermal conductivity to the superconducting coil 2 through the lead low temperature part 92 can be reduced.

The low temperature end part 91b of the lead high temperature part 91 of the current lead 9 and a high temperature end part 92a of the lead low temperature part 92 of the current lead 9 are cooled by thermal conduction through the lead heat transferring part 8a of the radiation shield 8 at the first stage 41 of the cryogenic refrigerator 4 for cooling the persistent current switch 1.

When a current is run in the superconducting coil 2 through the current lead 9 from the external DC power supply 100 shown in Fig. 1, a lead high temperature part 91 generates heat due to an electrical resistance of the lead high temperature part 91.

The heat generation at the lead high temperature part 91 of the current lead 9 transferred to the first stage 41 of the cryogenic refrigerator 4 for cooling the persistent current switch 1 by thermal conduction through the lead heat transferring part 8a, so that a temperature of the first stage 41 of the cryogenic refrigerator 4 increases. Because the temperature of the persistent current switch 1 is equal to or higher than the superconducting critical temperature of the superconducting wire 1c of the persistent current switch 1 when a current is supplied, no problem occurs though a temperature of the first stage 41 of the cryogenic refrigerator 4 increases.

On the other hand, in the first stage 31 of the cryogenic refrigerator 3, heat generation associated with current supplying to the superconducting coil 2 through the current lead 9 does not occur because there is no thermal conduction because the first stage 31 is prevented from coupling to the current lead 9. In addition, the lead low temperature part 92 of the current lead 9 is connected to the superconducting coil 2. However because the lead low temperature part 92 is made of a high temperature superconductor, electric resistance thereof is zero, so that there is no heat generation. Accordingly, temperatures of the second stage 32 of the cryogenic refrigerator 3 and the superconducting coil 2 are kept stable.

<Current Supplying Mode>

Next, with reference to Fig. 2, will be described the current supplying mode in which a current is supplied to the superconducting coil 2 from the external DC power supply 100 in the refrigerator cooling-type superconducting magnet J shown in Fig. 1.

Fig. 2 is a simplified conception drawing illustrating a current circuit and a cooling configuration in the current supplying mode of the refrigerator cooling-type superconducting magnet J.

In the current supplying mode, the persistent current switch 1 is heated to a temperature equal to or higher than the superconducting critical temperature of the superconducting wire 1c (see Fig. 1).

As described above, when the persistent current switch 1 is heated by a heater (not shown) housed in the bobbin 1b or when the cryogenic refrigerator 4 (see Fig. 1) is stopped, the temperature of the persistent current switch 1 increases to a temperature equal to or higher than the superconducting critical temperature, the superconducting wire 1c becomes in the normal conduction status from the superconducting status and has a specific resistance.

At this instance, because the superconducting coil 2 is cooled to the temperature equal to or lower than the superconducting critical temperature by the second stage 32 (see Fig. 1) of the cryogenic refrigerator 3, the superconducting coil 2 is in the superconducting status with an extremely low electric resistance. Accordingly, the current supplied from the external DC power supply 100 does not flow through the superconducting wire 1c having a specific electric resistance, but flows through the superconducting coil 2 having an extremely low electric resistance. A quantity of a current flowing through the superconducting coil 2 can be controlled by adjustment of a quantity of the current supplied by the external DC power supply 100. As described above, a status of the persistent current switch 1 becomes equal to a turn-off status in the current supplying mode as shown in Fig. 2.

<Persistent Current Mode>

Next, with reference to Fig. 3 will be described a persistent current mode in which no current is supplied to the superconducting coil 2 from the external DC power supply 100.
Fig. 3 is a simplified conception drawing illustrating a current circuit and a cooling configuration in the current supplying mode of the refrigerator cooling-type superconducting magnet according to the embodiment.
In the current supplying mode (see Fig. 2), after it is confirmed that a predetermined current flows through the superconducting coil 2, the persistent current switch 1 is cooled to or below the superconducting critical temperature of the superconducting wire 1c. At this instance, the superconducting wire 1c of the persistent current switch 1 varies from the normal conduction status to the superconducting status, and thus an electric resistance becomes extremely low.

When the persistent current switch 1 becomes in the superconducting status, as shown in Fig. 3, a closed circuit is formed with the superconducting material including the superconducting coil 2 and the persistent current switch 1. As described above, the current supplied from the external DC power supply 100 circulates in the closed circuit including the superconducting coil 2 and the persistent current switch 1 made of the superconducting materials, so that the operation becomes in the persistent current mode.
As described above, when the closed circuit including the superconducting coil 2 and the persistent current switch 1, etc. is formed, connection of the external DC power supply 100 to the closed circuit including the superconducting coil 2, the persistent current switch 1, etc. is physically disconnected, so that the current supplying from the external DC power supply 100 to the superconducting coil 2 is stopped as shown in Fig. 3.

<Thermal Conduction from Persistent Current Switch 1 to Superconducting Coil 2 in Current Supplying Mode>

At this instance, thermal conduction occurs from the persistent current switch 1 in the normal conduction state in which the temperature thereof is high to the superconducting coil 2 in the superconducting status in which the temperature thereof is low.
Thermal conduction from the superconducting wire 5 connecting the persistent current switch 1 to the superconducting coil 2 becomes a heat load on the superconducting coil 2 in the superconducting status in which the temperature is low.

Conventionally, the superconducting wire 5 connecting the persistent current switch 1 and the superconducting coil 2 has a configuration provided by that a plurality of filaments made of a superconducting material are inserted into a sleeve made of copper are stretched. Therefore, it is supposed that the thermal conduction is generated by the copper sleeve.
It is assumed that a diameter of the superconducting wire 5 is 1 mm, a length for coupling is 50 mm, a temperature difference between the persistent current switch 1 and the superconducting coil 2 is 10 K, and that a thermal conductivity of copper is 400 W/(m·K). When the thermal conduction through the superconducting wire 5 from the persistent current switch 1 to the superconducting coil 2 is computed by an operation of (cross section area/length) $\times$ thermal conductivity $\times$ temperature difference, there is thermal conduction of 0.063 W per each of the superconducting wires (5).

On the other hand, a heat generation quantity when the status becomes in the normal conduction status is computed using $1.68 \times 10^{-8}$ Ωm with assumption that a resistivity of the superconducting wire 5 is a resistivity of copper. When the electric resistance is computed from a diameter (1 mm) and a length (50 mm) of the superconducting wire 5 by operation of (length/cross sectional area) $\times$ resistivity, the electric resistance is about 0.0011Ω.
In a case where a rated current intensity is 300 A, when 10% of the current, i.e., 30 A, flows into a side of the persistent current switch 1, a heat generation quantity at the superconducting wire 5 becomes about 1 W. When heat of 1 W is generated at the superconducting wire 5 having the diameter of 1 mm and the length of 50 mm, a cross section area at the connecting part becomes insufficient, burning may occur because the temperature of the superconducting wire 5 increases.

To prevent this, conventionally, a coolant body (not shown) made of copper was disposed along the superconducting wire 5 to transfer the heat generated by the superconducting wire 5 to the persistent current switch 1 as a cooling source through the coolant body. However, in this case, a temperature of the whole of the superconducting wire 5 at the connecting part becomes the same temperature as the persistent current switch 1. This contrarily shortens a heat conducting distance through the superconducting wire 5, so that a phenomenon of increase in the thermal conduction to the superconducting coil 2 and increases in the temperature of the superconducting coil 2 takes place.

<Superconducting Bypass Line 6>

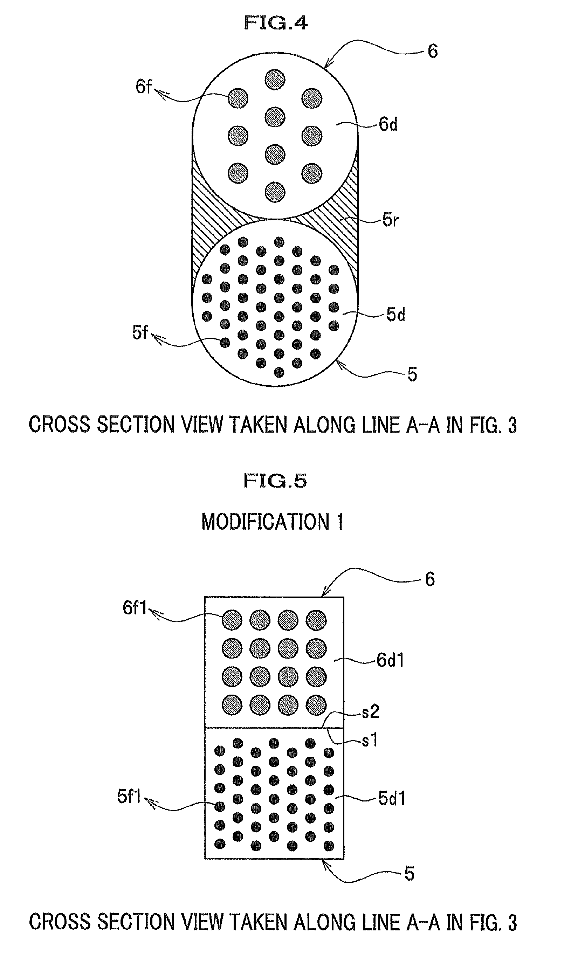

Then, in the embodiment, the coolant body, which was in the conventional refrigerator cooling-type superconducting magnet, is eliminated. Instead of this, as shown in Figs. 1 to 4, a superconducting bypass line 6 is installed in parallel to the superconducting wire 5. Fig. 4 is a cross section view, taken along line A-A in Fig. 3, illustrating a connection part between the superconducting wire 5 and the superconducting bypass line 6.

As shown in Fig. 4, the superconducting wire 5 includes a plurality of filaments 5f made of a superconducting material and a covering member 5d made of copper, etc., having a circular cross section around the filaments 5f.

The superconducting wire 5 is electrically coupled to the superconducting bypass line 6 through a connecting member 5r made of a superconducting material such as lead which is electrically conductive. Use of the covering member 5d made of copper, etc. having a circular cross section suppresses generation of an eddy current loss in the filaments 5f by causing an eddy current loss in the covering member 5d to increase an energy efficient.

The superconducting bypass line 6 includes a plurality of filaments 6f made of a superconducting material and a covering member 6d made of copper, etc., having a circular cross section around a plurality of the filaments 6f. Use of the covering member 6d made of copper, etc., having a circular cross section suppresses generation of the eddy current loss in the filaments 5f to increase energy efficient.

The filaments 6f of the superconducting bypass line 6 is formed with a material having a superconducting critical temperature higher than the superconducting wire 1c used in the persistent current switch 1. For example, when the persistent current switch 1 is NbTi (niobium - titanium alloy: superconducting critical temperature of 10 K), use of $MgB_2$ (magnesium diboride: superconducting critical temperature of 39 K) for the filaments 6f of the superconducting bypass line 6 can keep the superconducting bypass line 6 in the superconducting status although the persistent current switch 1 is in the normal conduction status.

Combination of the superconducting materials of the superconducting wire 1c of the persistent current switch 1 and the filaments 6f of the superconducting bypass line 6 is not limited to NbTi and $MgB_2$. As long as a condition that the superconducting critical temperature of the filaments 6f of the superconducting bypass line 6 is higher than the superconducting critical temperature of the superconducting wire 1c of the persistent current switch 1 is satisfied, various combinations of materials having different superconducting critical temperatures are applicable.

For example, when the yttrium system superconductor is used, which is one of high temperature superconductors across the whole of the superconducting bypass line 6, a thermal conductivity of the yttrium system superconductor is about 7 W/(m·K) which is smaller than copper by two digits. A large part of the heat load on the superconducting coil 2 from the persistent current switch 1 as a result of installation of the superconducting bypass line 6 as shown in Fig. 1 can be suppressed only to thermal conduction from the superconducting wire 5, which can be reduced.

Lengths of the superconducting bypass line 6 in the radiation shield 7 and the radiation shield 8 are appropriately determined in consideration of a cooling effect, etc. of the superconducting bypass line 6.

The external DC power supply 100 is heated up to a temperature equal to or higher than the superconducting critical temperature of the superconducting wire 1c, and thus becomes in the normal condition, so that heat is generated by a resistance in the superconducting wire 1c of the persistent current switch 1. The heat in the persistent current switch 1 increases the temperature of the superconducting wire 5 connecting the persistent current switch 1 to the superconducting coil 2. When a part of the superconducting wire 5 becomes in the normal conduction status, a specific resistance is generated in the normal conducting part of the superconducting wire 5.

However, because the superconducting bypass line 6 is disposed to be electrically connected in parallel to the superconducting wire 5 connecting the persistent current switch 1 and the superconducting coil 2 is in the superconducting status and has an extremely small electric resistance, the current flowing through the superconducting wire 5 changes a course thereof to the side of the superconducting bypass line 6 having a small electric resistance.

This causes the current not to flow through a part which is transient to the normal conduction status of the superconducting wire 5, so that no heat is generated even when the temperature of the superconducting wire 5 becomes a temperature equal to or higher than the superconducting critical temperature.

When a diameter of the superconducting bypass line 6 is the same as that of the superconducting wire 5 connecting between the persistent current switch 1 and the superconducting coil 2, heat invasion of 0.063W per one of the superconducting bypass lines 6 is caused with assumption that a temperature difference is 10 K between the persistent current switch 1 and the superconducting coil 2.

On the other hand, when the superconducting wire 5 generates heat at Q = 1W, in order to transfer a heat quantity Q (= 1 W) generated by the superconducting wire 5 to a cooling source through the coolant body, there is a relation computed with assumption that the thermal conductivity is $\lambda=400W/(m·K)$ and a temperature difference is $\Delta T=10K$ as follows:

$$A/L=Q/\lambda/\Delta T = 0.00025 \ (m^2/m) \qquad (1)$$

where

    A: thermal conduction area of the coolant body and
    L: a length of connecting part of the coolant body.

In Eq. (1), if it is assumed that the length of connecting part of the coolant body is 50 mm, a thermal conduction area A is 12.5 mm$^2$ to conduct heat. This is about 16-times a cross section area of a superconducting wire having a diameter of 1 mm (0.785 mm$^2$).

Heat generation in the superconducting wire 5 is suppressed by installing the superconducting bypass line 6, that is, making heat generation quantity of the superconducting wire 5 Q = 0 eliminates necessity of the coolant body corresponding to an area about 16-times the cross section area of the superconducting wire having the diameter of 1 mm (0.785 mm$^2$). This quantitatively supports the fact that installation of the superconducting bypass line 6 can largely reduce the heat load on the superconducting coil 2 from the persistent current switch 1.

The superconducting wire 5 and the superconducting bypass line 6 are electrically connected through the connecting member 5r made of a superconducting material of lead, etc., shown in Fig. 4 across a whole of a parallel section where the superconducting wire 5 and the superconducting bypass line 6 are disposed in parallel. More specifically, the superconducting wire 5 and the superconducting bypass line 6 are electrically coupled through the connecting member 5r across the whole of the parallel section where the superconducting wire 5 and the superconducting bypass line 6 are disposed in parallel.

Generally, the superconducting wire 5 and the superconducting bypass line 6 have circular cross sections as shown in Fig. 4. It is preferable to have the superconducting wire 5 and the superconducting bypass line 6 of modifications 1 to 3 described below.

<Connection of Superconducting Wire 5 and Superconducting Bypass Line 6 according to First Modification>

With reference to Fig. 5 will be described connection of the superconducting wire 5 and the superconducting bypass line 6 according to the first modification.

Fig. 5 is a cross section view, taken line A-A in Fig. 3, illustrating the connection part between the superconducting wire 5 and the superconducting bypass line 6 according to a first modification.

As shown in Fig. 5, the superconducting wire 5 and the superconducting bypass line 6 according to the first modification are respectively formed to have square cross shapes to directly contact the superconducting wire 5 with the superconducting bypass line 6 through a connecting part s1 of the superconducting wire 5 and a connecting part s2 of the superconducting bypass line 6 to electrically couple therebetween.

More specifically, the superconducting wire 5 according to the first modification has a plurality of filaments 5f1 and a covering member 5d1 having a square cross section made of copper, etc.

The filaments 6f1 according to the first modification includes a plurality of filaments 6f1 made of a superconducting material and a cover member 6d1, having a squire cross section around the plurality of filaments 6f1.

The superconducting wire 5 having the square cross section is electrically coupled to the bypass line 6 having a square cross section by direct contract.

As described above, the superconducting wire 5 and the superconducting bypass line 6 are respectively formed to have square cross sections to be electrically coupled through the connecting parts s1 and s2, each forming one side. This makes a contact area between the superconducting wire 5 and the superconducting bypass line 6 larger than the above-described embodiment. This can decrease electric resistances of the connecting parts s1, s2 between the superconducting wire 5 and the superconducting bypass line 6.

The first modification has been described with an example in which the superconducting wire 5 and 6 are respectively formed to have square cross sections. However, contact may be provided through one side of any polygonal cross section such as a triangle cross section and a pentagonal cross section, i.e., one side planes of the superconducting wires 5 and 6.

In addition, in the first modification, square cross sections are exemplified and described between the superconducting wire 5 and the superconducting bypass line 6. However, it is also possible to use a simple polygonal cross section which is not a regular polygonal.

In addition, it is sufficient to electrically couple the superconducting wire 5 and the superconducting bypass line 6 through respective one side faces in parallel along a longitudinal direction, though cross sections of the superconducting wire 5 and the superconducting bypass line 6 are not the same polygonal. Various polygons can be used. However, it is a preferable configuration to make the contact area (connection area) between the superconducting wire 5 and the superconducting bypass line 6 large.

<Connection between Superconducting Wire 5 and Superconducting Bypass Line 6 in Second Modification>

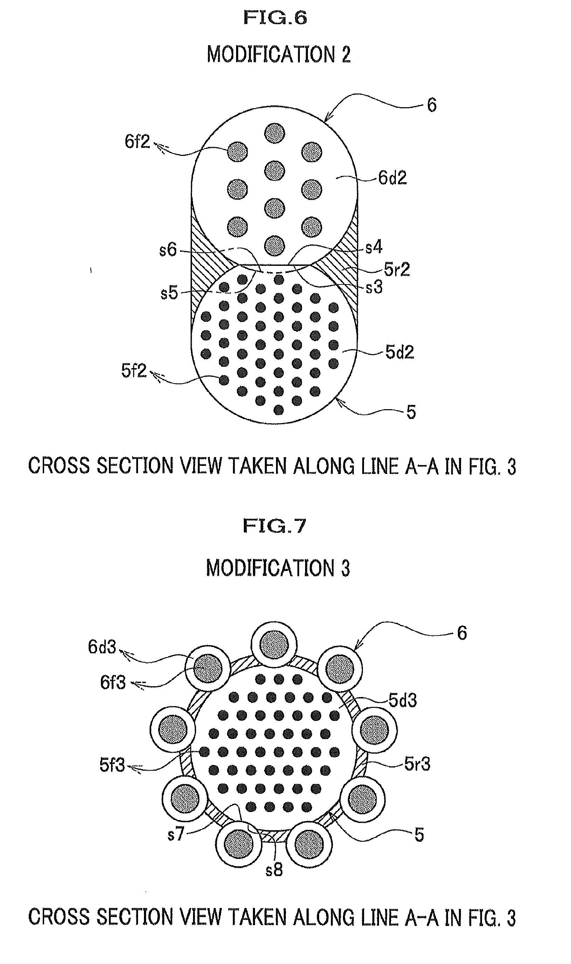

With reference to Fig. 6 will be described connection between the superconducting wire 5 and the superconducting bypass line 6.

Fig. 6 is a cross section view, taken line A-A in Fig. 3, illustrating the connection part between the superconducting wire 5 and the superconducting bypass line 6 according to a second modification of the present invention.

As shown in Fig. 6, the superconducting wire 5 and the superconducting bypass line 6 according to the second modification are formed by that only contact portions (connecting parts s3, s4) are processed to be flat.

The superconducting wire 5 according to the second modification includes a plurality of filaments 5f2 made of superconducting materials and a covering member 5d2 made of copper, etc. having a circular cross section except a connecting part s3 having a flat face (which is shown with a straight line in Fig. 6) around a plurality of filaments 5f2.

The superconducting bypass line 6 includes a plurality of filaments 6f2 made of a superconducting material and a covering member 6d2 made of copper, etc. having a circular cross section except a connecting part s4 having a flat face (which is shown with a straight line in Fig. 6) around a plurality of filaments 6f2.

As described above, a part of a side face of the superconducting wire 5 and a part of a side face of the superconducting bypass line 6 are processed to form the connecting parts s3, s4 which directly contact each other.

In addition, the superconducting wire 5 and the superconducting bypass line 6 contact and are joined each other at the connecting part s3 of the superconducting wire 5 and the connecting part s4 of the superconducting bypass line 6 for electrical connection and a connecting member 5r2 of a superconducting material of lead, etc. having an electrical conductivity is provided around the connecting part s3 and the connecting part s4.

According to the superconducting wire 5 and the superconducting bypass line 6, a contact area is increased because the superconducting wire 5 and the superconducting bypass line 6 are processed at only contact places (connecting parts s3, s4) to have flat faces, which is effective to decrease an electric resistance at the contact places (the connecting part s s3, s4) between the superconducting wire 5 and the superconducting bypass line 6.

In addition, as shown by a chain double-dashed line in Fig. 6, a direct contact configuration can be provided in which a part of a surface of the superconducting wire 5 is processed to have a connecting part s5 which is directly in contact with a connecting part s6 of the superconducting bypass line 6. Contrary, another direct contact configuration can be provided in which a part of a surface of the superconducting bypass line 6 is processed to have a connecting part (not shown) which is directly in contact with a connecting part (not shown) of the superconducting bypass line 6.

<Connection between Superconducting Wire 5 and Superconducting Bypass Line 6 according to Modification 3>

With reference to Fig. 7 will be described connection between the superconducting wire 5 and the superconducting bypass line 6 according to a third modification.

Fig. 7 is a cross section view, taken line A-A in Fig. 3, illustrating the connection part between the superconducting wire 5 and the superconducting bypass line 6 according to the third modification of the present invention.

As shown in Fig. 7, the superconducting wire 5 and the superconducting bypass line 6 according to the third modification is configured with a plurality of thin superconducting bypass lines 6 are installed around the superconducting wire 5.

The superconducting wire 5 according to the third modification includes a plurality of filaments 5f3 made of a superconducting material and a plurality of covering members 5d3 having substantially circular cross section around the filaments 5f3.

A plurality of the superconducting bypass lines 6 are formed each having such a shape that a filament 6f3 made of a superconducting material and a covering member 6d3 made of copper, etc. having a circular cross section around the filament 6f3.

The covering member 5d and a plurality of the superconducting bypass line 6 are in contact with each other and are joined each other at the connecting part s7 of the superconducting wire 5 and the connecting part s8 of a plurality of the superconducting bypass line 6 for electrical connection.

In addition, a plurality of the superconducting bypass lines 6 have a connecting member 5r3 made of superconducting material of lead, etc., having an electric conductivity such that the superconducting bypass line 6 contacts the covering members 5d3 made of copper, etc. having a substantially circular cross section for the superconducting wire 5.

According to the superconducting wire 5 and the superconducting bypass line 6 of the third modification, distances between the superconducting wire 5 and a plurality of the superconducting bypass line 6 is shortened as well as a contact area between the superconducting wire 5 and the superconducting bypass line 6 increases, so that en electric resistance of the contact part (connecting parts s7, s8) can be made smaller.

In addition, connecting parts s3, s4, and s5 (second modification), and connecting part s7 (third modification) where the superconducting wire 5 and the superconducting bypass line 6 directly contact each other can be formed by a method of molding, etc. other than processing.

<Configuration of Connecting Part (Superconducting Wire 5, Superconducting Bypass Line 6) between Persistent Current Switch 1 and Superconducting Coil 2>

As shown in Fig. 1, the superconducting bypass line 6 contacts not only the superconducting wire 5 as the connecting part with the persistent current switch 1 and the superconducting coil 2 but also a part of the superconducting wire 1c of the persistent current switch 1 and a part of the superconducting coil 2, wherein the contact parts of the superconducting bypass line 6 surly join with the superconducting wire 1c of the persistent current switch 1 and the superconducting coil 2. This surely cools the superconducting bypass line 6 by the cryogenic refrigerator 4 and the cryogenic refrigerator 3.

In the current supplying mode shown in Fig. 2, thermal conduction occurs in both the superconducting wire 5 and the superconducting bypass line 6. However, because there is no heat generation associated with the current supplying, a temperature increase in the superconducting coil 2 can be suppressed minimum.

In this instance, the superconducting bypass line 6 is required to be installed in an insulation status with the persistent current switch 1. More specifically, an insulator such as a Kapton tape is installed between the superconducting bypass line 6 and the persistent current switch 1 to provide an insulation status. Because an insulation status should be provided between the superconducting bypass line 6 and the superconducting coil 2 similar to the superconducting coil 2 between the superconducting bypass line 6 and the superconducting coil 2, an insulator such as a Kapton tape is installed between the superconducting bypass line 6 and the superconducting coil 2 to provide an insulation status.

Parts which are connecting parts with the persistent current switch 1 and the superconducting coil 2 where the superconducting wire 5 and the superconducting bypass line 6 are electrically connected in parallel are fixed with supporting members manufactured with a material (not shown) having a low thermal conductivity to prevent the superconducting wire 5 and the superconducting bypass line of the connecting part from moving.

«Advantageous Effect»

According to the above-described configuration, the superconducting bypass line 6 having the superconducting critical temperature higher than the superconducting wire 5 in parallel to the superconducting wire 5 for connecting the persistent current switch 1 and the superconducting coil 2, is installed, and the superconducting wire 5 and the superconducting bypass line 6 are electrically connected in parallel along a longitudinal direction thereof.

As described above, when the superconducting bypass line 6 is installed, which has the superconducting critical temperature higher than that of the persistent current switch 1 around the superconducting wire 5 at the connecting part with the persistent current switch 1 and the superconducting coil 2, heat transfer from the persistent current switch 1 to the superconducting coil 2 are made small.

This causes the temperature of the persistent current switch 1 to increase even if a quantity of heating is small, so that a heating quantity of the heater for the persistent current switch 1 can be made small.

In addition, because the heat load on the superconducting coil 2 becomes small, in the current supplying mode which is in the normal conducting status provided by heating the persistent current switch 1 to a temperature equal to or higher than the superconducting critical temperature, the temperature of the superconducting coil 2 can be lowered. This increases a quantity of the current supplied to the superconducting coil 2. Accordingly, a high magnetic field intensity can be generated by the refrigerator cooling-type superconducting magnet J.

In the current supplying mode, though the superconducting wire 5 for connecting the superconducting coil 2 to the persistent current switch 1 becomes in the normal condition, a superconducting status of the superconducting bypass line 6 around the superconducting wire 5 is kept, so that the current flowing through the superconducting wire 5 changes a flow to the superconducting bypass line 6.

Accordingly, heat generation at a normal conducting part of the superconducting wire 5 for connecting the persistent current switch 1 to the superconducting coil 2 can be suppressed.

In addition, when transition occurs from the current supplying mode in which the current is supplied from the external DC power supply 100 to the persistent current mode in which the current is not supplied, a persistent current flows through a closed loop formed with the superconducting coil 2 and the persistent current switch 1. At this instance, both the superconducting wire 5 which is a connecting part between the persistent current switch 1 and the superconducting coil 2 and the superconducting bypass line 6 are cooled to a temperature equal to or lower than the superconducting critical temperature. In this status an electric resistance of the junction part between the superconducting wire 5 and the superconducting bypass line 6 (the connecting member 5r (see Fig. 4)) becomes greater than the electric resistance of the superconducting wire 5, so that the persistent current does not flow through the superconducting bypass line 6 but flows through on a side of the superconducting wire 5 (see Fig. 3).

More specifically, in the persistent current mode, because the current flows through the superconducting wire 5 having a smaller electric resistance than the superconducting bypass line 6, it is possible to allow the electric resistance of the closed loop to be in the same level as the conventional superconducting magnet, which can prevent magnetic field attenuation in the persistent current mode.

The loop formed with superconducting materials are the same materials used in the conventional NMR and MRI, so that attenuation of the persistent current can be suppressed to such a level as not to affect measurements in the NMR and MRI.

Because two cryogenic refrigerators, i.e., the cryogenic refrigerator 4 cooling the persistent current switch 1 and the cryogenic refrigerator 3 cooling the superconducting coil 2 are used, heater input applied to the persistent current switch 1 to switch the persistent current switch 1 from the superconducting status to the normal conducting status does not act as a direct heat load on the cryogenic refrigerator 3 for cooling the superconducting coil 2, though the heater input acts as a heat load on the cryogenic refrigerator 4 for cooling the persistent current switch 1. Though thermal conduction from the persistent current switch 1 to the superconducting coil 2 increases due to temperature increase of the persistent current switch 1, adoption of the configuration can stabilize the temperature of the superconducting coil 2 at a low temperature, because the thermal conduction is smaller than the heater input by more than one order of magnitude.

In addition, as shown in Figs. 4 to 7, description has been made with an example in which the superconducting wire 5 and the superconducting bypass line 6 are respectively formed with filaments made of the superconducting material and copper, etc. However, it is also possible to entirely form the superconducting wire 5 and the superconducting bypass line 6 with filaments of superconducting material. Alternatively, the superconducting wire 5 and the superconducting bypass line 6 shown in Figs. 4 to 7 can be formed by twisting a plurality of filament wires of superconducting materials.

In addition, in the embodiment, the case where the heater is housed inside the persistent current switch 1 has been exemplified. However, another configuration is possible in which the heater is installed to the cryogenic refrigerator 4. In other words, a location of the heater is not limited as long as the heater heats the persistent current switch 1.

In addition, in the embodiment and the first, second, and third modifications, the case where the superconducting bypass line 6 is a single wire has been described. However, it is also possible to provide configurations similar to the embodiment (see Fig. 4), and the first, second, third modifications (see Figs. 5 to 7) by using a plurality of wires, i.e., more than one wire of the superconducting bypass line 6.

[Description of Reference Numerals]

1 persistent current switch
2 superconducting coil
3 cryogenic refrigerator (first cryogenic refrigerator)
4 cryogenic refrigerator (second cryogenic refrigerator)
5 superconducting wire
6 superconducting bypass line
7 radiation shield (first shield)
8 radiation shield (second shield)
9 current lead
10 vacuum vessel
31 first cooling stage (cooling stage) (of the cryogenic refrigerator 3)
32 second cooling stage (cooling stage) (of cryogenic refrigerator 3)
41 first cooling stage (cooling stage) (of cryogenic refrigerator 4)
42 second cooling stage (cooling stage) (of cryogenic refrigerator 4)
92 lead low temperature part (first current lead part) 100 external DC power supply
s1, s2 connecting part (flat plane, one side plane, connecting part)
s3, s4 connecting part (flat, contact part)
s5, s6, s7, s8 connecting part (curved face, contact part)
J refrigerator-cooling superconducting magnet (refrigerator cooling-type superconducting magnet)

**Claims**

1. A refrigerator cooling-type superconducting magnet including: a superconducting coil configured to generate a magnetic field; a persistent current switch configured to switch between a persistent current mode in which a current is not supplied from an external power supply to the superconducting coil and a current supplying mode in which the current is supplied from the external power supply to the superconducting coil; a first cryogenic refrigerator configured to cool the superconducting coil;
a second cryogenic refrigerator configured to cool the persistence current switch; a vacuum vessel configured to house the superconducting coil, and cooling stages of the first and second cryogenic temperature refrigerators therein in a vacuum status, the refrigerator cooling-type superconducting magnet comprising:

a superconducting wire configured to connect the superconducting coil to the persistent current switch; and
at least one superconducting bypass line disposed in parallel to the superconducting wire, electrically connected to the superconducting wire along a longitudinal direction thereof,

**characterized in that** a superconducting critical temperature of the superconducting bypass line is higher than a superconducting critical temperature of the persistent current switch.

2. The refrigerator cooling-type superconducting magnet as claimed in claim 1, **characterized in that** the superconducting coil and the persistent current switch are formed with metallic superconducting materials, and that the superconducting bypass line comprises a high temperature superconductor having a superconducting critical temperature higher than the superconducting coil and the persistent switch.

3. The refrigerator cooling-type superconducting magnet as claimed in claim 1, **characterized in that** the superconducting bypass line and the superconducting wire are electrically connected in parallel with each other in a longitudinal direction thereof through a flat or curved faces thereof.

4. The refrigerator cooling-type superconducting magnet as claimed in claim 3, **characterized in that** the superconducting bypass line has a cross section in a polygon, and the superconducting wire has a cross section in a polygon and that superconducting bypass line and the superconducting wire are electrically connected in parallel in a longitudinal direction through side flat faces thereof with each other.

5. The refrigerator cooling-type superconducting magnet as claimed in claim 1, **characterized in that** the superconducting bypass line is configured with a plurality of superconducting wires.

6. The refrigerator cooling-type superconducting magnet as claimed in claim 1, **characterized in that** the superconducting wire and the superconducting bypass line have a contact part where the superconducting wire directly contacts the superconducting bypass line.

7. The refrigerator cooling-type superconducting magnet as claimed in claim 6, **characterized in that** the contact part is formed by processing a part of a surface of the superconducting bypass line or the superconducting wire or both the superconducting bypass line and the superconducting wire.

8. The refrigerator cooling-type superconducting magnet as claimed in claim 1, **characterized in that** the refrigerator cooling-type superconducting magnet comprises:

a first shield, formed to cover the superconducting coil, configured to shield the superconducting coil from radiation heat to the superconducting coil; and
a second shield, formed to cover the persistent current switch, configured to shield the persistent current switch from radiation heat to the persistent current switch.

9. The refrigerator cooling-type superconducting magnet as claimed in claim 8, **characterized in that** a current lead for supplying a current from the external power supply to the superconducting coil comprises, between a connection part with a part of the second shield and the superconducting coil, a first current lead that is in a superconducting status at a cooling temperature of the second shield when the superconducting coil is in a superconducting status.

FIG.1

# FIG.2

## CURRENT SUPPLYING MODE

## FIG.3

## PERSISTENT CURRENT MODE

FIG.4

6f — 6
6d
5r
5d
5f — 5

CROSS SECTION VIEW TAKEN ALONG LINE A-A IN FIG. 3

FIG.5

MODIFICATION 1

6f1 — 6
6d1
s2
s1
5f1 — 5d1
5

CROSS SECTION VIEW TAKEN ALONG LINE A-A IN FIG. 3

## FIG.6

## MODIFICATION 2

CROSS SECTION VIEW TAKEN ALONG LINE A-A IN FIG. 3

## FIG.7

## MODIFICATION 3

CROSS SECTION VIEW TAKEN ALONG LINE A-A IN FIG. 3

## INTERNATIONAL SEARCH REPORT

| International application No. |
| --- |
| PCT/JP2010/053047 |

**A. CLASSIFICATION OF SUBJECT MATTER**
*H01F6/04*(2006.01)i, *H01F6/00*(2006.01)i, *H01L39/04*(2006.01)i

According to International Patent Classification (IPC) or to both national classification and IPC

**B. FIELDS SEARCHED**

Minimum documentation searched (classification system followed by classification symbols)
H01F6/04, H01F6/00, H01L39/04

Documentation searched other than minimum documentation to the extent that such documents are included in the fields searched
Jitsuyo Shinan Koho          1922-1996   Jitsuyo Shinan Toroku Koho   1996-2010
Kokai Jitsuyo Shinan Koho    1971-2010   Toroku Jitsuyo Shinan Koho   1994-2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 1997/011472 A1 (Hitachi, Ltd.), 27 March 1997 (27.03.1997), entire text; all drawings (Family: none) | 1-9 |
| A | JP 10-294213 A (Hitachi, Ltd.), 04 November 1998 (04.11.1998), entire text; all drawings & EP 874376 A2 | 1-9 |
| A | JP 2004-179413 A (Mitsubishi Electric Corp.), 24 June 2004 (24.06.2004), entire text; all drawings (Family: none) | 1-9 |

☒ Further documents are listed in the continuation of Box C.          ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 20 May, 2010 (20.05.10) | 01 June, 2010 (01.06.10) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

21

**INTERNATIONAL SEARCH REPORT**

| International application No. |
|---|
| PCT/JP2010/053047 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 10-107333 A  (Sumitomo Heavy Industries, Ltd.),<br>24 April 1998 (24.04.1998),<br>entire text; all drawings<br>(Family: none) | 1-9 |
| A | JP 8-130112 A  (The Furukawa Electric Co., Ltd.),<br>21 May 1996 (21.05.1996),<br>entire text; all drawings<br>(Family: none) | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003151821 A

**Non-patent literature cited in the description**

- International Superconductivity Technology Center, "Superconductivity Web21. Superconductivity Web21 Editing Division of International Superconductivity Technology Center, January 2009